# FASCICULE DE BREVET EUROPEEN

(11) **EP 0 926 792 B1**
(45) Date de publication et mention de la délivrance du brevet: **14.06.2006**
(21) Numéro de dépôt: 98410141.0
(22) Date de dépôt: 09.12.1998
(51) Int. Cl.: H02B 1/26, H01H 71/08, H01H 71/02

(54) **Dispositif de détrompage pour appareils électriques, en particulier pour disjoncteurs et interrupteurs différentiels**
Verschlüsselungsvorrichtung für elektrische Geräte, insbesondere für Schutzschalter und Differentialschutzschalter
Keying device for electrical apparatuses, in particular for circuit-breakers and differential switches

(30) Priorité: 18.12.1997 FR 9716418
(43) Date de publication de la demande: 30.06.1999
(73) Titulaire: SCHNEIDER ELECTRIC INDUSTRIES SAS, 92500 Rueil-Malmaison (FR)
(72) Inventeur: Lebeau, Bernard, 38050 Grenoble Cedex 09 (FR); Guillon, Patrick, 38050 Grenoble Cedex 09 (FR); Burnot, Claude, 38050 Grenoble Cedex 09 (FR); Hannequin, Pascal, 38050 Grenoble Cedex 09 (FR); Dornier, Jean, 38050 Grenoble Cedex 09 (FR)
(74) Mandataire: Ritzenthaler, Jacques

(56) Documents cités:
- EP-A- 0 626 712
- EP-A- 0 717 425

## Description

La présente invention concerne un dispositif de détrompage pour appareils électriques notamment pour un disjoncteur et un bloc différentiel, ledit dispositif étant destiné à empêcher le raccordement électrique de deux appareils présentant une incompatibilité tenant par exemple à leur nature ou à leur calibre et à permettre cette association lorsque plusieurs conditions sont respectées.

On connaît un dispositif du genre précédemment mentionné tel que décrit dans le document EP 0223622 et destiné à empêcher le raccordement d'un bloc différentiel sur un disjoncteur lorsque le calibre nominal du bloc différentiel est inférieur à celui du disjoncteur. Pour assurer ce détrompage, il est prévu sur le bloc différentiel, un pion de détrompage dont la position correspond ou non à celle d'une alvéole conjuguée ménagée dans le boîtier du disjoncteur.

On connaît également une autre solution consistant à prévoir en un endroit donné du boîtier, un pion apte à s'engager dans une ouverture de forme correspondante ménagée en regard dudit pion dans le boîtier d'un autre appareil, le pion et l'orifice précités ayant un diamètre et une longueur donnés différents pour chaque calibre.

Or, dans ces deux réalisations, la configuration de détrompage est fixée au départ sur chaque appareil, les formes des pions et des orifices étant inhérentes à l'une des pièces des appareils. Il en résulte qu'il est nécessaire de gérer autant de pièces différentes qu'il y a de combinaisons de détrompage.

Les documents EP-A-0 717 425 et EP-A-0 626 712 décrivent un dispositif de détrompage du genre mentionné ci-dessus.

La présente invention résout ce problème et propose un dispositif de détrompage en particulier pour disjoncteurs et blocs différentiels, réduisant à une seule le nombre de pièces à gérer pour réaliser le détrompage, la configuration du détrompage étant réalisée en fin de montage, ce qui permet d'obtenir une rationalisation industrielle optimale.

A cet effet, la présente invention a pour objet un dispositif du genre précédemment mentionné, ce dispositif étant caractérisé en ce qu'il comporte un certain nombre de pions prévus sur le boîtier d'un premier appareil et correspondant chacun à une caractéristique susceptible d'être prise en compte au moment de l'association, et un même nombre d'orifices prévus sur le boîtier de l'autre appareil, lesdits orifices étant fermés par un obturateur apte à être supprimé pour libérer l'orifice, lesdits pions étant situés de manière à se trouver en regard respectivement des orifices en position associée des appareils, et en ce que les pions correspondant à des caractéristiques non vérifiées par le premier appareil sont escamotés tandis que les obturateurs correspondant à des caractéristiques vérifiées par le second appareil sont rendus inopérants de manière à permettre l'introduction des pions non escamotés du premier appareil dans les orifices correspondants du second appareil.

Mais d'autres avantages et caractéristiques de l'invention apparaîtront mieux dans la description détaillée qui suit et se réfère aux dessins annexés donnés uniquement à titre d'exemple et dans lesquels :
- Les figures 1 et 2 sont deux vues partielles en perspective, illustrant respectivement deux configurations différentes de détrompage mises en oeuvre pour l'association d'un disjoncteur et d'un bloc différentiel,
- La figure 3 est une vue en plan illustrant la face latérale d'un bloc différentiel présentant une configuration de détrompage comportant sept caractéristiques.

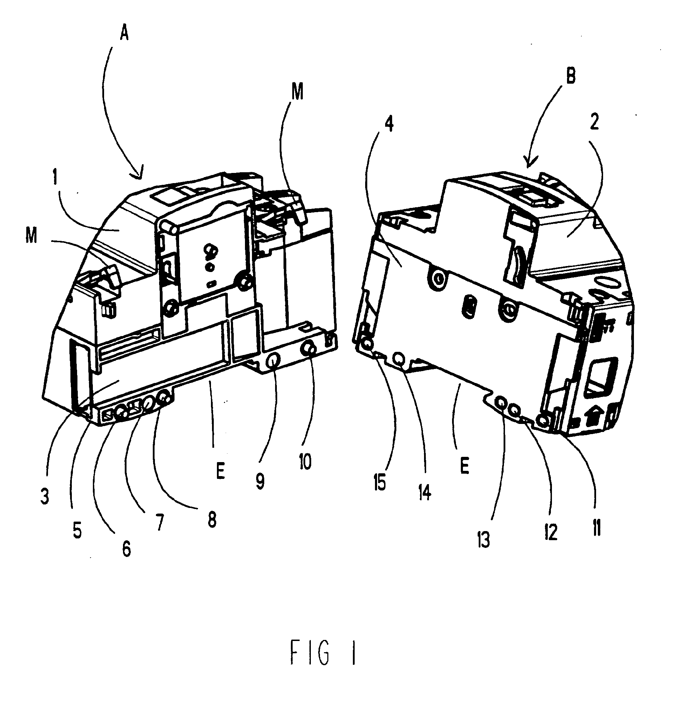

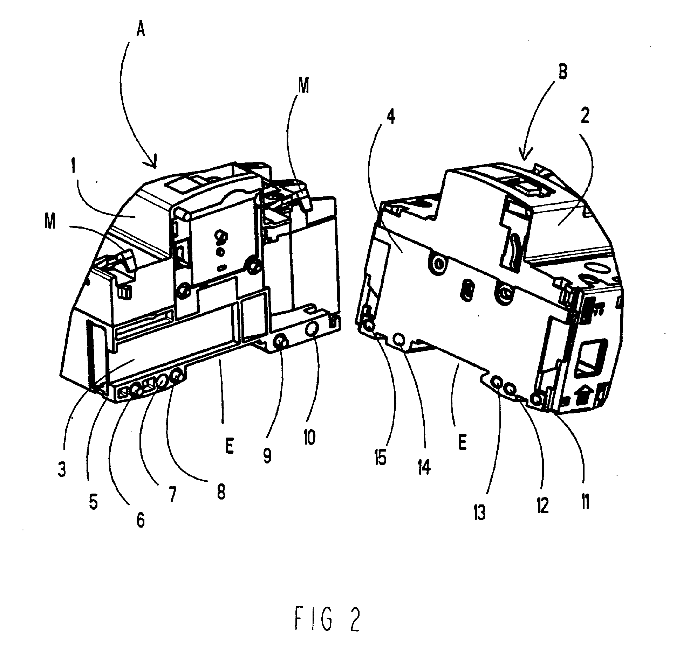

Sur les figures 1 et 2, on voit deux boîtiers modulaires A et B renfermant respectivement un bloc différentiel 1 et un disjoncteur 2, lesdits boîtiers étant destinés à être juxtaposés sur un même rail non représenté et à être fixés l'un à l'autre par leur faces latérales 3,4 par l'intermédiaire de moyens de fixation M.

Sur la figure 1, le boîtier du bloc différentiel 1 comporte sur sa face latérale 3, destinée à être accolée au disjoncteur 2, au voisinage de sa face arrière 5 de fixation au rail, cinq pions de détrompage 6,7,8,9,10 . Parmi ces cinq pions, deux 7,9 ont été bouterollés ou découpés tandis que les trois autres 6,8,10 s'étendent perpendiculairement à ladite face latérale 3 d'un côté de l'évidement E destiné à permettre la fixation du bloc différentiel 1 sur le rail. De la même manière, le boîtier du disjoncteur 2 comporte, en des emplacements correspondant à ceux des pions 6 à 10 lorsque le bloc différentiel 1 est associé au disjoncteur 2, des orifices 11 à 15. Les deux orifices 12,14 situés en regard des pions bouterollés 7,9, comportent encore des obturateurs, tandis que les trois orifices 11,13,15 situés en regard des pions 6,8,10 n'en comportent plus, ceux-ci ayant été retirés, par exemple par découpage, de manière à permettre l'introduction des trois pions 6,8,10. Dans la réalisation représentée sur la figure 1, le premier pion 6 associé à son orifice 11 réalise le détrompage de la norme industrielle. Le pion 10 réalise le détrompage par nombre de pôles et permet de vérifier que les deux appareils sont de type tripolaire. Le pion 8 réalise le détrompage par le calibre, c'est à dire ne permet l'association que lorsque le calibre des appareils est inférieur à 63A pour le disjoncteur.

Sur la figure 2, le bloc différentiel comporte également cinq pions, mais ce sont les premier 6 troisième 8 et quatrième 9 pions qui subsistent, les autres ayant été escamotés, lesdits pions 6,8,9 correspondant respectivement à la norme industrielle, à un calibre inférieur à 63A et au caractère tétrapolaire de l'appareil. On notera que l'on pourra ajouter à volonté d'autres pions s'il est nécessaire de prendre en compte d'autres caractéristiques.

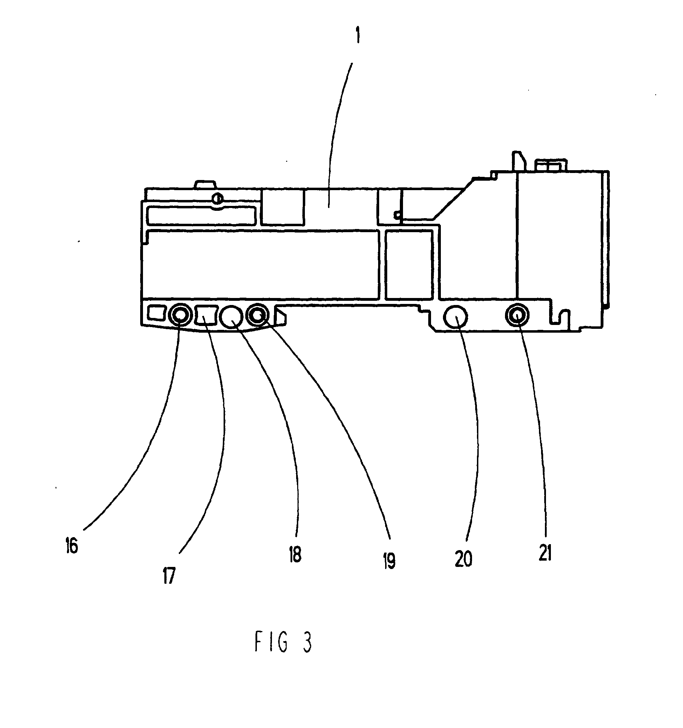

Sur la figure 3, le bloc différentiel 1 comprend six emplacements pour un pion 16 à 21. Le premier réalise un détrompage tenant à la norme industrielle, le 2ème au caractère bipolaire, le 3^{ème} à la norme domestique, le 4ème à un calibre de 63A, le 5^{ème} au caractère tétrapolaire et le 6ème au caractère tripolaire. L'appareil représenté est un bloc différentiel tripolaire, de norme industrielle et de calibre 63A. C'est pourquoi les troisième 18, et cinquième 20 pions en partant de la gauche ont été découpés ou bouterollés .

Ainsi, lors de leur fabrication, les boîtiers des appareils sont équipés d'un certain nombre de pions de détrompage ou respectivement d'orifices munis d'obturateurs, venus de matière avec une pièce amovible du boîtier. Cette pièce est unique pour tous les types d'appareils, ce qui permet de ne gérer qu'une seule pièce. Ce n'est qu'en fin de montage que les pions correspondant à des caractéristiques non vérifiées sont supprimés pour les appareils équipés de ces pions, en général les appareils additionnels, et que les obturateurs des orifices correspondant aux caractéristiques vérifiées sont retirés, pour les autres appareils, en général les appareils de base.

On notera que ce dispositif pourra être utilisé pour réaliser le détrompage entre d'autres appareils, par exemple entre un interrupteur différentiel et des disjoncteurs.

On notera également que le détrompage ne se limitera pas à la norme, au calibre et au nombre de pôles mais pourra être élargi à d'autres critères.

L'invention permet de condamner toute mauvaise association tout en offrant une rationalisation industrielle maximale. Ce principe de détrompage par pion et obturateur permet de détromper un grand nombre de combinaisons par ajout de pions supplémentaires.

## Revendications

1. Dispositif de détrompage destiné à empêcher le raccordement électrique de deux appareils présentant une incompatibilité tenant par exemple à leur nature, leur calibre etc., mais à autoriser cette association lorsque une ou plusieurs conditions sont remplies pour les deux appareils, **caractérisé en ce qu'**il comporte un certain nombre de pions (6 à 10 et 16 à 22) prévus sur le boîtier d'un premier appareil (1) et correspondant chacun à une caractéristique susceptible d'être prise en compte au moment de l'association, et un même nombre d'orifices (11 à 15) prévus sur le boîtier de l'autre appareil (2), lesdits orifices (11 à 15) étant fermés par un obturateur apte à être supprimé pour libérer ledit orifice (11 à 15), lesdits pions (6 à 10) étant situés de manière à se trouver en regard respectivement des orifices (11 à 15) en position associée des appareils (1) et (2), et **en ce que** les pions correspondant à des caractéristiques non vérifiées par le premier appareil (1) sont escamotés tandis que les obturateurs correspondant à des caractéristiques vérifiées par le second appareil (2) sont rendus inopérants de manière à permettre l'introduction des pions non escamotés du premier appareil (1) dans les orifices correspondants du second appareil (2).

2. Dispositif selon la revendication 1, **caractérisé en ce que** l'escamotage des pions (6 à 10) est réalisé par une découpe de ces derniers.

3. Dispositif selon la revendication 1, **caractérisé en ce que** l'escamotage des pions (6 à 10) est réalisé par bouterollage de ces derniers.

4. Dispositif selon l'une quelconque des revendications précédentes, **caractérisé en ce que** l'un au moins des critères de détrompage est le nombre de pôles de l'appareil.

5. Dispositif selon l'une quelconque des revendications précédentes, **caractérisé en ce que** l'un au moins des critères de détrompage est le calibre de l'appareil.

6. Dispositif selon l'une quelconque des revendications précédentes, **caractérisé en ce que** l'un au moins des critères de détrompage est la norme de l'appareil.

7. Dispositif selon la revendication 5, **caractérisé en ce que** le calibre est inférieur à 63A.

8. Dispositif selon la revendication 6, **caractérisé en ce que** la norme est soit industrielle soit domestique.

9. Dispositif selon l'une quelconque des revendications précédentes, **caractérisé en ce que** les deux appareils sont respectivement un bloc différentiel (1) et un disjoncteur (2).

10. Dispositif selon la revendication 9, **caractérisé en ce que** les pions (6 à 10) sont prévus sur le bloc différentiel (1) alors que les orifices (11 à 15) sont prévus sur le disjoncteur (2).

11. Dispositif selon l'une quelconque des revendications précédentes, **caractérisé en ce que** les pions (6 à 10) et obturateurs (11 à 15) sont disposés respectivement sur les deux faces en regard (3 et 4) des deux boîtiers à juxtaposer.

## Claims

1. Error prevention device designed to prevent electrical connection of two equipment units presenting an incompatibility as regards for example their nature, their rating etc., but to enable this association when one or more conditions are respected for the two equipment units, **characterized in that** it comprises a certain number of pins (6 to 10 and 16 to 22) provided on the case of a first equipment unit (1) and each corresponding to a characteristic liable to be taken into account at the time association is performed, and the same number of openings (11 to 15) provided on the case of the other equipment unit (2), said openings (11 to 15) each being closed by a blanking cap able to be removed to free said opening (11 to 15), said pins (6 to 10) being situated in such a way as to be respectively facing the openings (11 to 15) in the associated position of the equipment units (1) and (2), and that the pins corresponding to characteristics not verified by the first equipment unit (1) are retracted whereas the blanking caps corresponding to characteristics verified by the second equipment unit (2) are rendered inoperative so as to enable the non-retracted pins of the first equipment unit (1) to engage in the corresponding openings of the second equipment unit (2).

2. Device according to claim 1, **characterized in that** retraction of the pins (6 to 10) is performed by cutting the latter off.

3. Device according to claim 1, **characterized in that** retraction of the pins (6 to 10) is performed by heading the latter.

4. Device according to any one of the foregoing claims 1, **characterized in that** at least one of the error prevention criteria is the number of poles of the equipment unit.

5. Device according to any one of the foregoing claims 1, **characterized in that** at least one of the error prevention criteria is the rating of the equipment unit.

6. Device according to any one of the foregoing claims, **characterized in that** at least one of the error prevention criteria is the standard of the equipment unit.

7. Device according to claim 5, **characterized in that** the rating is less than 63A.

8. Device according to claim 6, **characterized in that** the standard is either industrial or domestic.

9. Device according to any one of the foregoing claims, **characterized in that** the two equipment units are respectively an earth leakage unit (1) and a circuit breaker (2).

10. Device according to claim 9, **characterized in that** the pins (6 to 10) are provided on the earth leakage unit (1) whereas the openings (11 to 15) are provided on the circuit breaker (2).

11. Device according to any one of the foregoing claims, **characterized in that** the pins (6 to 10) and blanking caps (11 to 15) are respectively arranged on the two facing panels (3 and 4) of the two cases to be juxtaposed.

## Patentansprüche

1. Verwechslungsschutzanordnung zur Verhinderung einer elektrischen Verbindung zwischen zwei Schaltgeräten, die aufgrund ihres Typs, ihres Nennstroms usw. nicht miteinander kombiniert werden dürfen, sowie zur Ermöglichung dieser Verbindung, wenn eine oder mehrere Bedingungen durch beide Schaltgeräte erfüllt werden, **dadurch gekennzeichnet, dass** die Anordnung eine bestimmte Anzahl von am Gehäuse eines ersten Schaltgeräts (1) ausgebildeten Stiften (6 bis 10 bzw. 16 bis 22), die jeweils einem bei der Verbindung der Geräte zu berücksichtigenden Merkmal entsprechen, sowie eine gleiche Anzahl von am Gehäuse des anderen Schaltgerätes (2) ausgebildeten Öffnungen (11 bis 15) umfasst, welche Öffnungen (11 bis 15) durch jeweils eine Abdeckung verschlossen sind, die zur Freigabe der genannten Öffnung (11 bis 15) entfernt werden kann, wobei die genannten Stifte (6 bis 10) so angeordnet sind, dass sie in der Verbindungsstellung der Schaltgeräte (1) und (2) mit den Öffnungen (11 bis 15) fluchten, und dass die Stifte für die nicht zutreffenden Merkmale des ersten Schaltgeräts (1) versenkt, während die Abdeckungen für die zutreffenden Merkmale des zweiten Schaltgeräts (2) entfernt werden, so dass die nicht versenkten Stifte des ersten Schaltgeräts (1) in die zugeordneten Öffnungen des zweiten Schaltgeräts (2) eingreifen können.

2. Anordnung nach Anspruch 1, **dadurch gekennzeichnet, dass** das Versenken der Stifte (6 bis 10) durch Abtrennen derselben erfolgt.

3. Anordnung nach Anspruch 1, **dadurch gekennzeichnet, dass** das Versenken der Stifte (6 bis 10) durch Flachschlagen derselben erfolgt.

4. Anordnung nach irgendeinem der vorhergehenden Ansprüche, **dadurch gekennzeichnet, dass** mindestens eines der Verwechslungsschutzkriterien die Anzahl der Pole des Schaltgerätes ist.

5. Anordnung nach irgendeinem der vorhergehenden Ansprüche, **dadurch gekennzeichnet, dass** mindestens eines der Verwechslungsschutzkriterien der Nennstrom des Schaltgerätes ist.

6. Anordnung nach irgendeinem der vorhergehenden Ansprüche, **dadurch gekennzeichnet, dass** mindestens eines der Verwechslungsschutzkriterien die Normentsprechung des Schaltgerätes ist.

7. Anordnung nach Anspruch 5, **dadurch gekennzeichnet, dass** der Nennstrom kleiner als 63 A ist.

8. Anordnung nach Anspruch 6, **dadurch gekennzeichnet, dass** die Normentsprechung für einen Industriestandard oder eine Werksnorm gelten kann.

9. Anordnung nach irgendeinem der vorhergehenden Ansprüche, **dadurch gekennzeichnet, dass** es sich bei den beiden Schaltgeräten um einen Differenzstromschutzblock (1) und einen Leistungsschalter (2) handelt.

10. Anordnung nach Anspruch 9, **dadurch gekennzeichnet, dass** die Stifte (6 bis 10) am Differenzstromschutzblock (1) und die Öffnungen (11 bis 15) am Leistungsschalter (2) ausgebildet sind.

11. Anordnung nach irgendeinem der vorhergehenden Ansprüche, **dadurch gekennzeichnet, dass** die Stifte (6 bis 10) und Abdeckungen (11 bis 15) an den beiden einander gegenüber liegenden Seiten (3 und 4) der beiden aneinander zu bauenden Gehäuse ausgebildet sind.
